# FASCICULE DE BREVET EUROPEEN

(11) **EP 3 979 152 B1**
(45) Date de publication et mention de la délivrance du brevet: **16.10.2024**
(21) Numéro de dépôt: 21200507.8
(22) Date de dépôt: 01.10.2021
(51) Int. Cl.: G06Q 10/20, A62C 13/76, G08B 25/10, G08B 25/14, G08B 29/04

(54) **SYSTÈME DE SURVEILLANCE D'ÉQUIPEMENTS, DISPOSITIFS ET PROCÉDÉS ASSOCIÉS**
GERÄTEÜBERWACHUNGSSYSTEM UND ENTSPRECHENDE VORRICHTUNGEN UND VERFAHREN
SYSTEM FOR MONITORING EQUIPMENT, ASSOCIATED DEVICES AND METHODS

(30) Priorité: 02.10.2020 FR 2010095
(43) Date de publication de la demande: 06.04.2022
(73) Titulaire: DESAUTEL, 69003 Lyon (FR)
(72) Inventeur: AURENGE, Julien, Jean, Jacques, 69250 MONTANAY (FR); BABEAU, Benoît, Luc, Christian, Georges, 69005 LYON (FR); BECK, Claude, 33200 BORDEAUX (FR); BIEDERMANN, Nicolas, Jean, 69270 FONTAINE SUR SAONE (FR); DERIAUX, François, Jean-Claude, 69330 JONAGE (FR); MANGIALENTI, Gilles, Jean-Pierre, 69800 SAINT-PRIEST (FR); MASSART, Christophe, Sébastien, Jacques, 92500 RUEIL MALMAISON (FR); MASSON, Christophe, Albert, 69300 CALUIRE ET CUIRE (FR)
(74) Mandataire: Lavoix

(56) Documents cités:
- FR-A1- 3 070 067
- US-A1- 2003 116 329
- US-A1- 2017 209 726
- US-A1- 2020 226 916
- KAN ELIANE: "Sécurité incendie : le français Qowisio démocratise l'accès au marché des objets connectées", INFOPROTECTION, 2 June 2016 (2016-06-02), pages 1 - 3, XP055789670, Retrieved from the Internet <URL:https://www.infoprotection.fr/securite-incendie-le-francais-qowisio-democratise-lacces-au-marche-des-objets-connectees/> [retrieved on 20210324]

## Description

La présente invention se rapporte à un système de surveillance d'équipements, ainsi que des dispositifs et des procédés associés, et concerne plus généralement le domaine des équipements connectés.

L'invention est tout particulièrement applicable au domaine de la gestion des bâtiments, et concerne notamment des équipements de sécurité et des équipements de lutte contre les incendies dans les bâtiments.

A titre d'exemple, les équipements de sécurité peuvent être des extincteurs, des systèmes d'alarme incendie, des blocs d'éclairage de sécurité, des robinets d'incendie armés, des trappes de désenfumage, des colonnes sèches, des systèmes automatiques d'extinction d'incendie, des appareils de détection tels que des détecteurs d'incendie ou des détecteurs de fumée, des alarmes sonores, et bien d'autres exemples encore.

De façon connue, ces équipements font l'objet de visites périodiques par des techniciens spécialisés, qui sont chargés de vérifier le bon état de marche de ces appareils, d'en assurer la maintenance préventive et d'intervenir pour les réparer lorsqu'une défaillance est identifiée.

Il est en effet primordial que de tels équipements, notamment lorsqu'il s'agit d'équipements de sécurité, soient en permanence opérationnels afin d'assurer la sécurité du bâtiment.

Toutefois, ces visites sont souvent espacées dans le temps et ne permettent pas toujours de détecter à temps l'apparition d'un défaut ou d'un dérangement éventuel.

Le document US 2020/226916 A1 décrit un exemple de système pour surveiller des équipements de protection incendie, qui toutefois ne donne pas entière satisfaction.

C'est à ces inconvénients qu'entend plus particulièrement remédier l'invention en proposant de surveiller l'état fonctionnel d'un ensemble d'équipements, notamment des équipements de sécurité, et plus particulièrement des équipements de lutte contre l'incendie dans un bâtiment, cette surveillance étant réalisée de façon fiable et peu coûteuse à mettre en oeuvre.

A cet effet, un aspect de l'invention concerne un système pour surveiller un ensemble d'équipements, notamment des équipements de sécurité dans un bâtiment, le système comportant une pluralité d'appareils de surveillance, chaque appareil de surveillance étant configuré pour être associé à un équipement et comportant un capteur configuré pour mesurer une grandeur physique relative à l'état dudit équipement, dans lequel chaque appareil de surveillance est configuré pour :
détecter un changement d'état de l'équipement surveillé lorsque le capteur mesure un changement de la grandeur physique ;
en réponse à un changement de la grandeur physique, générer et envoyer un message à destination d'un serveur informatique par l'intermédiaire d'une liaison de communication sans fil, ledit message comprenant un indicateur d'état représentatif d'un changement de l'état fonctionnel de l'équipement associé.

De plus:
- L'indicateur d'état peut prendre une première valeur ou une deuxième valeur prédéfinies, la première valeur indiquant une absence de changement d'état, la deuxième valeur indiquant un changement d'état susceptible de correspondre à un état anormal.
- La première valeur et la deuxième valeur de l'indicateur d'état sont les mêmes pour tous les équipements surveillés.

Selon des aspects avantageux mais non obligatoires, un tel système de surveillance peut incorporer une ou plusieurs des caractéristiques suivantes, prises isolément ou suivant toute combinaison techniquement admissible :
- La taille dudit message est inférieure ou égale à un kilooctet.
   - L'appareil de surveillance est configuré pour communiquer avec le serveur informatique par l'intermédiaire d'une liaison de communication sans fil à bas débit.
   - Les équipements sont des équipements de sécurité, tels que des extincteurs, des systèmes d'alarme incendie, des blocs d'éclairage de sécurité, des robinets d'incendie armés, des trappes de désenfumage, des colonnes sèches, des systèmes automatiques d'extinction d'incendie, des appareils de détection tels que des détecteurs d'incendie ou des détecteurs de fumée, des alarmes sonores, ou toute combinaison de ces types d'équipements.
   - Le serveur informatique est configuré pour envoyer une alerte à un utilisateur à partir des informations contenues dans un message reçu depuis l'un des appareils de surveillance lorsque l'indicateur d'état contenu dans le message reçu indique un changement d'état.
   - Au moins un appareil de surveillance est configuré pour envoyer des messages à destination du serveur, de façon répétée avec une périodicité d'envoi prédéfinie, par exemple une périodicité quotidienne, dans lequel le serveur est configuré pour envoyer une alerte à un utilisateur si aucun message n'a été reçu depuis cet appareil de surveillance au bout d'une durée supérieure à la périodicité d'envoi.

Selon un autre aspect, l'invention concerne un procédé pour surveiller un ensemble d'équipements, notamment des équipements de sécurité dans un bâtiment, au moyen d'un système de surveillance. Le procédé comporte des étapes consistant à :
- détecter, par un appareil de surveillance du système associé à un équipement à surveiller, un changement d'état de l'équipement surveillé lorsqu'un capteur de l'appareil de surveillance mesure un changement d'une grandeur physique relative à l'état dudit équipement ; et
- en réponse à la détection d'un changement d'état, générer et envoyer un message à destination d'un serveur informatique par l'intermédiaire d'une liaison de communication sans fil, ledit message comprenant un indicateur d'état représentatif d'un changement de l'état fonctionnel de l'équipement associé.

Selon un aspect, le serveur informatique envoie une alerte à un utilisateur à partir des informations contenues dans un message reçu depuis l'un des appareils de surveillance lorsque l'indicateur d'état contenu dans le message reçu indique un changement d'état.

L'invention sera mieux comprise et d'autres avantages de celle-ci apparaîtront plus clairement à la lumière de la description qui va suivre d'un mode de réalisation d'un système de surveillance donnée uniquement à titre d'exemple et faite en référence aux dessins annexés, dans lesquels :
[Fig 1] la figure 1 représente schématiquement un exemple d'un système de surveillance d'équipements, conformément à un mode de réalisation de l'invention ;
[Fig 2] la figure 2 représente schématiquement un exemple d'un appareil de surveillance appartenant au système de surveillance de la figure 1 et étant associé à un équipement à surveiller, ainsi qu'un exemple d'un message émis par l'appareil de surveillance et étant indicatif de l'état fonctionnel dudit équipement ;
[Fig 3] la figure 3 représente schématiquement des exemples de procédés d'envoi, par l'appareil de surveillance de la figure 2, d'un message indicatif de l'état fonctionnel d'un équipement identifié auquel l'appareil de surveillance est associé ;
[Fig 4] la figure 4 représente schématiquement un procédé de réception et de traitement d'un message envoyé par un appareil de surveillance du système de la figure 1.

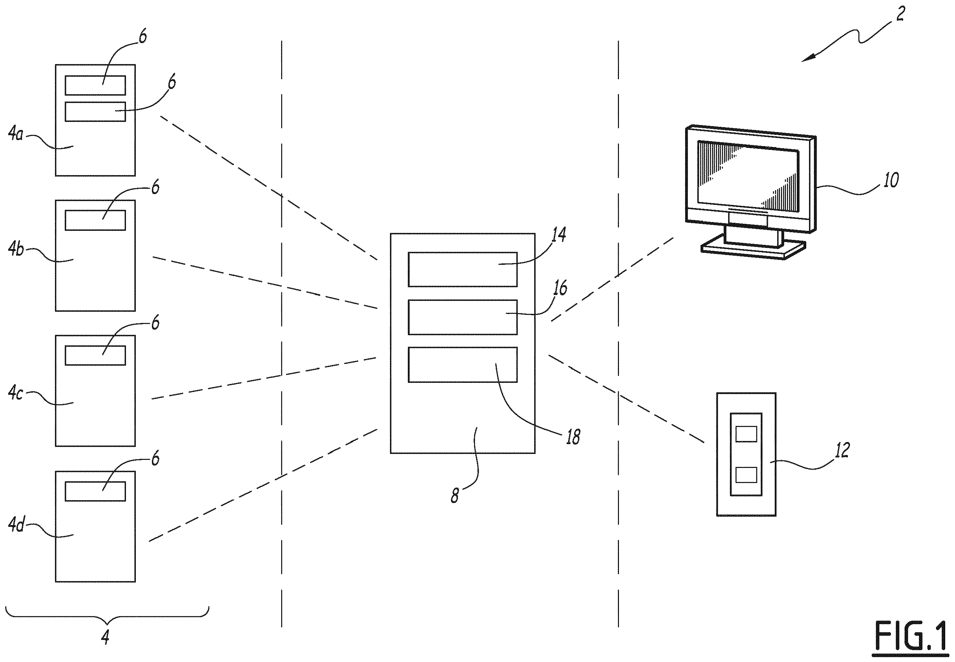

La figure 1 représente un système 2 pour surveiller des équipements 4, par exemple au sein d'un bâtiment.

Dans de nombreux modes de réalisation, les équipements 4 sont des équipements de sécurité, et plus particulièrement des équipements de sécurité destinés à la protection incendie et/ou à la lutte contre les incendies, notamment à l'intérieur d'un bâtiment.

A titre d'exemple non limitatif donné à des fins d'illustration, les équipements de sécurité 4 peuvent être des extincteurs, des systèmes d'alarme incendie, des blocs d'éclairage de sécurité, des robinets d'incendie armés, des trappes de désenfumage, des colonnes sèches, des systèmes automatiques d'extinction d'incendie, des appareils de détection tels que des détecteurs d'incendie ou des détecteurs de fumée, des alarmes sonores, ou toute combinaison de ces types d'équipements, et bien d'autres exemples encore.

D'autres types d'équipements de sécurité peuvent aussi être envisagés dans certaines variantes.

Les équipements 4 peuvent être disposés dans le bâtiment ou hors du bâtiment, en étant installés à un emplacement spécifique.

Les équipements 4 peuvent être installés fixement, mais peuvent aussi, dans certains cas, être installés de façon amovible sur un emplacement. C'est notamment le cas des extincteurs, qui peuvent être montés sur un support ou posés à un emplacement et en être déplacés par un utilisateur lorsqu'il est nécessaire de lutter contre un incendie.

Chaque appareil 6 est configuré pour détecter un changement d'un état de l'équipement 4 auquel il est associé. De façon générale, le système 2 comporte une pluralité d'appareils de surveillance 6. Chaque appareil de surveillance 6 est configuré pour être associé à un équipement 4.

Dans de nombreux cas, plusieurs appareils 6 peuvent être associés à un même équipement 4, par exemple pour surveiller l'état de fonctionnement de cet équipement de différentes façons, afin de fournir une information redondante et améliorer les chances de détecter une anomalie.

Alternativement, plusieurs appareils 6 peuvent être aussi utilisés pour surveiller différentes propriétés d'un même équipement 4. Par exemple, dans le cas d'un extincteur, on peut guetter un déplacement non autorisé d'un extincteur, et en parallèle surveiller une baisse anormale du niveau de produit contenu dans le réservoir de l'extincteur.

Comme expliqué plus en détail ci-après, chaque équipement 4 peut être caractérisé par un état : soit un état de fonctionnement normal, soit un état de fonctionnement anormal, ou dégradé.

Dans l'état normal, l'équipement 4 fonctionne normalement et est apte à être utilisé pour accomplir la fonction à laquelle il est destiné.

Dans l'état anormal ou dégradé, l'équipement 4 a subi un dysfonctionnement ou a été assujetti à une action anormale, rendant l'équipement 4 susceptible de ne pas être en mesure d'accomplir la fonction à laquelle il est destiné en cas de sollicitation.

Selon des exemples donnés à des fins d'illustration, lorsque les équipements 4 sont des équipements de sécurité, notamment des équipements de sécurité incendie dans un bâtiment, alors les propriétés (ou grandeurs physiques) suivantes de ces équipements 4 pourraient faire l'objet d'une surveillance par le système 2.

Par exemple, pour un équipement tel qu'un extincteur, on peut considérer qu'une anomalie se produit lorsque l'extincteur est déplacé de sa position nominale pour être posé à un autre emplacement. Ce déplacement peut être détecté au moyen d'un capteur de mouvement (tel qu'un accéléromètre ou un gyroscope), ou d'un capteur de position (tel qu'un récepteur d'un système de géolocalisation par satellite).

On peut également considérer qu'une anomalie se produit lorsque l'extincteur est décroché de son support (par exemple un support mural), ce qui peut être détecté au moyen d'un capteur de position.

Un autre exemple, pouvant être utilisé seul ou en combinaison avec les autres exemples, est de détecter une rupture du scellé de sécurité qui équipe typiquement ces équipements, un scellé brisé indiquant que l'extincteur (ou l'appareil) a fait l'objet d'une manipulation susceptible de compromettre son bon fonctionnement ultérieur.

Il est aussi envisageable de mesurer le niveau de poudre ou de fluide ou de gaz restant dans un réservoir de l'extincteur, et/ou une pression de gaz ou de fluide dans le réservoir de l'extincteur, et considérer qu'une anomalie se produit lorsque le niveau ou la pression surveillé est inférieur à une valeur de référence.

Selon d'autres exemples, pour un bloc d'éclairage de sécurité, il est possible de surveiller le niveau de charge de la batterie, ou de surveiller la luminosité produite par le module d'éclairage, ou de détecter un défaut du module d'éclairage ou de son alimentation.

Une surveillance analogue peut être mise en place pour des équipements électriques comportant une alimentation électrique, tel qu'une alarme sonore, ou un détecteur de fumée, ou un détecteur de chaleur.

Il est également possible de surveiller la pression de fluide ou la pression de gaz à l'intérieur d'un élément hydraulique au sein d'un système d'extinction automatique, par exemple un pulvérisateur (« sprinkler » en anglais) ou un tuyau alimentant un tel pulvérisateur.

Selon d'autres exemples, il est possible de surveiller la position d'un élément mécanique pouvant être déplaçable entre deux positions distinctes, telle qu'une position ouverte et une position fermée. Cela concerne par exemple des équipements mécaniques tels que des trappes de désenfumage, des vannes, ou des robinets.

On comprend que les appareils 6 d'un même système peuvent être différents et qu'ils ne mesurent pas forcément tous la même grandeur, notamment s'ils sont associés à des équipements 4 de différents types.

Dans l'exemple illustré, des appareils de surveillance 6 sont disposés sur des équipements 4 qui portent individuellement les signes de référence 4a, 4b, 4c et 4d. Deux appareils 6 sont installés sur l'équipement 4a, tandis que chacun des équipements 4b, 4c et 4d reçoit un seul appareil 6. Le nombre d'équipements 4 et d'appareils 6 est donné uniquement à des fins explicatives et n'est pas limitatif.

Le système 2 est configuré pour être en communication avec un serveur informatique 8, pouvant généralement être placé à distance du bâtiment dans lequel sont disposés les équipements 4. Dans de nombreux modes de réalisation, le système 2 comporte ledit serveur informatique 8.

Toutefois, au sens de la présente description, le terme « serveur informatique » peut désigner un service logiciel ou une plateforme logicielle de type « cloud computing », pouvant par exemple être fourni par un fournisseur spécialisé. Ainsi, dans certains cas, le serveur 8 peut ne pas faire partie du système 2, mais le serveur 8 (ou le service logiciel ou la plateforme logicielle correspondant) est néanmoins accessible depuis le système 2.

Chacun des appareils de surveillance 6 est notamment configuré pour envoyer des données vers le serveur informatique 8 par l'intermédiaire d'une liaison de communication sans fil, et notamment par l'intermédiaire d'une liaison radio.

De préférence, les appareils de surveillance 6 sont configurés pour communiquer avec le serveur 8 par l'intermédiaire d'une liaison de communication sans fil à bas débit (« low-power wide-area network » en anglais), tel que le protocole LoRaWAN, ou la technologie SigFox, ou toute technologie équivalente.

Dans de nombreuses implémentations, le serveur 8 est configuré pour être accessible par un utilisateur au moyen d'une interface homme-machine, par exemple au moyen d'un ordinateur 10 ou d'un dispositif de communication mobile 12, tel qu'un smartphone (téléphone mobile) ou une tablette graphique.

Cet accès au serveur 8 par un utilisateur peut être réalisé par l'intermédiaire d'un réseau de communications tel qu'un réseau local (LAN), ou par internet, ou par un réseau de téléphonie cellulaire, ou par tout moyen équivalent.

Dans de nombreux modes de réalisation, le serveur informatique 8 comporte une interface de communication 14, un processeur 16 et une base de données 18. En pratique, la base de données 18 pourrait être installée dans un autre serveur informatique qui serait néanmoins couplé ou connecté au serveur 8.

L'interface de communication 14 permet au serveur 8 de collecter des messages radio émis par les appareils 6. De préférence, l'interface de communication 14 est compatible avec une ou plusieurs des technologies de communication radio à longue portée précédemment mentionnées. En pratique, l'interface de communication 14 peut comporter une antenne radio, ou peut être connecté à un dispositif de réception radio.

Par exemple, le processeur 16 est un microprocesseur. Le processeur 16 est couplé à une mémoire, ou à tout support d'enregistrement de données lisible par ordinateur, qui comporte des instructions exécutables et/ou un code logiciel prévu pour mettre en oeuvre un ou plusieurs des procédés décrits ci-après lorsque ces instructions sont exécutées par le processeur.

Au sens de la présente description, la base de données 18 peut être un support de stockage de données structuré tel qu'une base de données relationnelle, ou un fichier de données structuré, tel qu'un fichier XML (Extensible Markup Language) ou un fichier JSON (Javascript Object Notation), ou un système de stockage distribué, ou toute structure de données ou technologie appropriée.

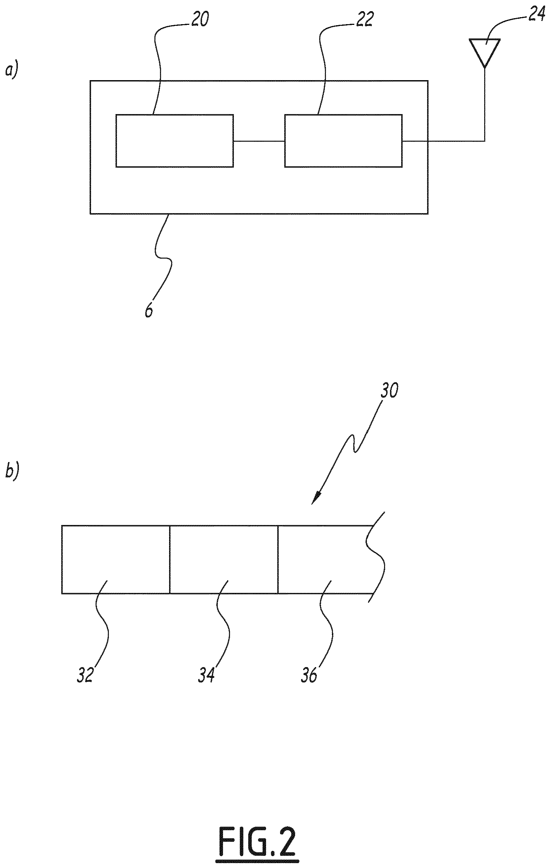

L'insert a) de la figure 2 représente un exemple d'implémentation d'un appareil de surveillance 6 selon des modes de réalisation.

De façon générale, chaque appareil de surveillance 6 comporte un capteur 20, un module de traitement de données 22 et une interface de communication radiofréquence 24.

Bien que cela ne soit pas illustré, chaque appareil de surveillance 6 peut également comporter une source d'alimentation électrique configurée pour alimenter le capteur 20, le circuit de traitement 22 et l'interface 24. La source d'alimentation électrique peut comporter un dispositif de stockage, telle qu'une batterie, et/ou un dispositif de récupération d'énergie.

Ainsi, l'appareil 6 peut être autonome en énergie.

Le capteur 20 est configuré pour mesurer une grandeur physique et/ou pour détecter une variation d'une grandeur physique. Le capteur 20 est choisi en fonction de la nature de l'équipement 4 auquel l'appareil de surveillance 6 est destiné à être associé.

Selon la nature de l'équipement 4 pour lequel sera prévu l'appareil 6, le capteur 20 peut être choisi pour mesurer une grandeur physique ou plus généralement une propriété physique qui se rapporte à l'état de l'équipement 4 surveillé, cette grandeur ou propriété pouvant prendre deux états distincts : par exemple un état ouvert ou un état fermé.

Il peut s'agir là d'un capteur mesurant un déplacement, ou bien d'un capteur détectant si un scellé de sécurité a été brisé, ou encore un capteur mesurant l'état ouvert ou fermé d'un élément mécanique pouvant prendre deux positions, tel qu'une trappe de désenfumage, ou une vanne, ou un robinet.

Alternativement, le capteur 20 peut être choisi pour mesurer une grandeur physique pouvant varier continûment, telle qu'une température, un débit, une pression d'un fluide ou d'un gaz, un niveau de remplissage d'un réservoir, une luminosité, une concentration, notamment une concentration d'un élément chimique, et bien d'autres exemples encore.

A titre d'illustration, comme expliqué dans les exemples précédemment décrits, le capteur 20 peut aussi mesurer un déplacement, ou un changement de position.

De nombreux types de capteurs 20 peuvent ainsi être utilisés pour construire différents appareils 6 adaptés à surveiller l'évolution d'un état fonctionnel d'équipements 4 de différents types.

En pratique, le capteur 20 est connecté au module 22.

Dans certaines variantes, un appareil 6 pourrait comporter plusieurs capteurs 20.

Dans de nombreux modes de réalisation, le module de traitement de données 22 est implémenté par un ou plusieurs circuits électroniques.

Par exemple, le module 22 comporte un processeur, tel qu'un microcontrôleur programmable ou un microprocesseur.

Le processeur est couplé à une mémoire, ou à tout support d'enregistrement de données lisible par ordinateur, qui comporte des instructions exécutables et/ou un code logiciel prévu pour mettre en oeuvre un ou plusieurs des procédés décrits ci-après lorsque ces instructions sont exécutées par le processeur.

De préférence, la mémoire ou le support d'enregistrement de données lisible par ordinateur sont embarqués dans l'appareil 6.

Selon des variantes, le module 22 peut comporter un processeur de traitement du signal (DSP), ou un composant logique reprogrammable (FPGA), ou un circuit intégré spécialisé (ASIC), ou tout élément équivalent.

Les composants de l'appareil 6 peuvent être logés dans une enveloppe de protection, telle qu'un boîtier.

L'interface de communication 24 est connectée au module 22 et est configurée pour permettre l'envoi de messages radiofréquences à destination du serveur 8, de préférence au moyen d'un protocole de communication radio longue portée à bas débit tel que mentionné précédemment.

L'insert b) de la figure 2 représente un exemple de message radiofréquence 30 indicatif de l'état fonctionnel d'un équipement 4 susceptible d'être envoyé par un appareil de surveillance 6 associé à cet équipement 4.

Dans de nombreux modes de réalisation, le message 30 comporte au moins une information sur un changement d'état fonctionnel de l'équipement 4 surveillé.

Par exemple, le message 30 comporte un indicateur d'état représentatif de l'état fonctionnel d'un équipement et qui indique si l'équipement 4 est dans un état normal ou si l'équipement surveillé 4 a changé d'état ou est susceptible d'avoir changé d'état.

Dans l'exemple illustré, le message 30 comporte un en-tête 32 et un corps.

Par exemple, l'en-tête 32 comporte des informations d'adressage permettant au message de transiter jusqu'au serveur 8. Le corps comporte un identifiant 34 propre à l'appareil 6 permettant d'identifier l'appareil 6, et comporte également l'indicateur d'état défini ci-dessus, et ici désigné par la référence 36.

Par exemple, l'indicateur d'état 36 peut être une valeur numérique, ou une valeur booléenne, ou un ou plusieurs caractères alphanumériques, ou tout autre symbole approprié, pouvant être exprimé selon tout encodage adapté.

Par exemple, l'indicateur d'état 36 peut être défini comme pouvant prendre une première valeur, indiquant un état de fonctionnement normal de l'équipement 4, et une deuxième valeur, différente de la première valeur, la deuxième valeur indiquant que l'équipement 4 est dans un état de fonctionnement anormal ou que l'équipement 4 est susceptible d'être dans un état de fonctionnement anormal.

Il est ici avantageux de ne transmettre par le message 30 qu'une information sur un changement d'état, plutôt qu'une information plus longue sur l'état actuel ou la valeur mesurée, car grâce à cela, le message 30 envoyé peut être très court, et le traitement du message par le serveur 8 une fois le message 30 arrivé à destination est relativement aisé à mettre en oeuvre, notamment comparé au cas hypothétique où le message envoyé contiendrait toute l'information mesurée par les capteurs 20.

Cela permet aussi de standardiser le traitement des messages reçus par le serveur 8 lorsque différents types d'équipements 4 sont surveillés. La première valeur et la deuxième valeur peuvent être prédéfinies de la même façon pour tous les équipements 4 surveillés par le système 2. En d'autres termes, la première valeur et la deuxième valeur sont les mêmes pour tous les équipements 4.

Cela est particulièrement avantageux dans le cas le système 2 doit surveiller un nombre important d'équipements étant de nature différente et/ou dont les propriétés surveillées sont différentes.

Par exemple, la taille du message 30 est inférieure ou égale à 1 kilo-octet.

L'envoi d'un tel message peut donc particulièrement être réalisé par un réseau de communication à bas débit sans pour autant que cela ne conduise à une durée d'envoi trop longue.

De plus, le message 30 est particulièrement simple à générer et à traiter, et son envoi par l'interface de communication 24 ne consomme que peu d'énergie. Cela permet de préserver la durée de vie de la batterie ou de la source d'alimentation embarquée dans l'appareil 6 (le cas échéant). Et l'utilisation de liaisons de communication radio à bas débit rend les échanges de données robustes et simples à mettre en place.

Ainsi, ce type de communication est particulièrement approprié pour un ensemble d'appareils de mesure 6 sans fil et autonomes déployés dans un bâtiment.

Dans des modes de réalisation alternatifs, la structure du message 30 pourrait être différente. Le message 30 peut comporter des données supplémentaires

Par exemple, le message 30 peut comporter des données relatives à un code de correction d'erreur.

Optionnellement, le message 30 peut contenir un horodatage indiquant l'heure à laquelle le message 30 a été envoyé et/ou l'heure à laquelle le changement d'état de l'équipement 4 a été détecté par l'appareil 6.

Dans d'autres variantes optionnelles, le contenu informationnel du message (c'est-à-dire l'indicateur 36 et l'identifiant 34, ou plus généralement, le corps du message 30) pourrait être enregistré dans le message 30 sous forme encodée et/ou, optionnellement, sous forme encryptée.

On comprend donc que, dans ce cas, l'appareil 6 est configuré pour mettre en oeuvre des étapes de cryptage dudit contenu informationnel, et que le serveur 8 est configuré pour décrypter ce contenu lors de sa réception. Par exemple, le serveur 8 et les appareils 6 peuvent avoir recours à des clés de chiffrement publique/privée, ou à tout autre procédé de chiffrement adéquat.

Le système 2 permet de surveiller à distance l'état fonctionnel d'un ensemble d'équipements 4, notamment des équipements de sécurité, et plus particulièrement des équipements de lutte contre l'incendie dans un bâtiment, cette surveillance étant réalisée de façon fiable et relativement simple à mettre en oeuvre.

Notamment, le système 2 permet de détecter en temps réel un changement d'état fonctionnel d'un ou de plusieurs équipements, et de transmettre l'information au serveur 8 de façon simple et efficace en ne nécessitant que des faibles ressources de calcul et de communication.

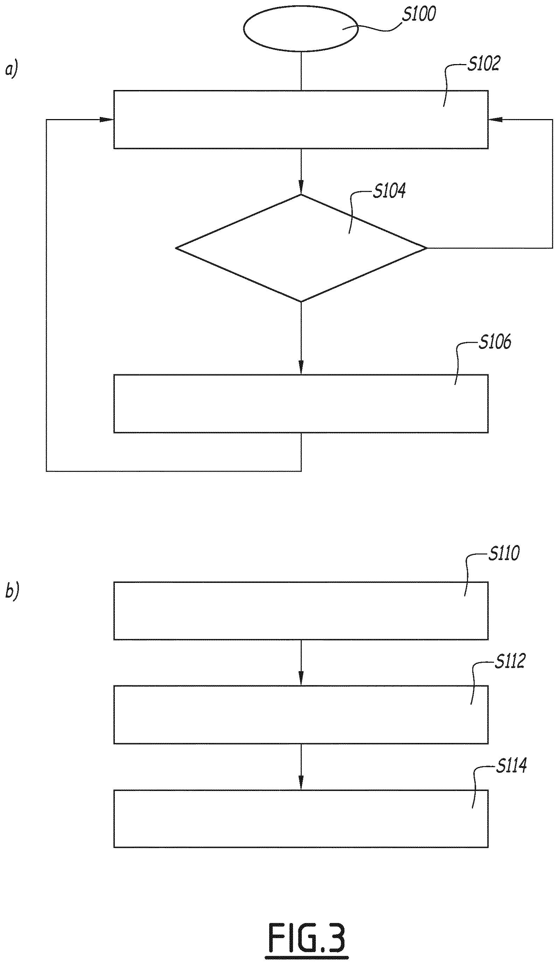

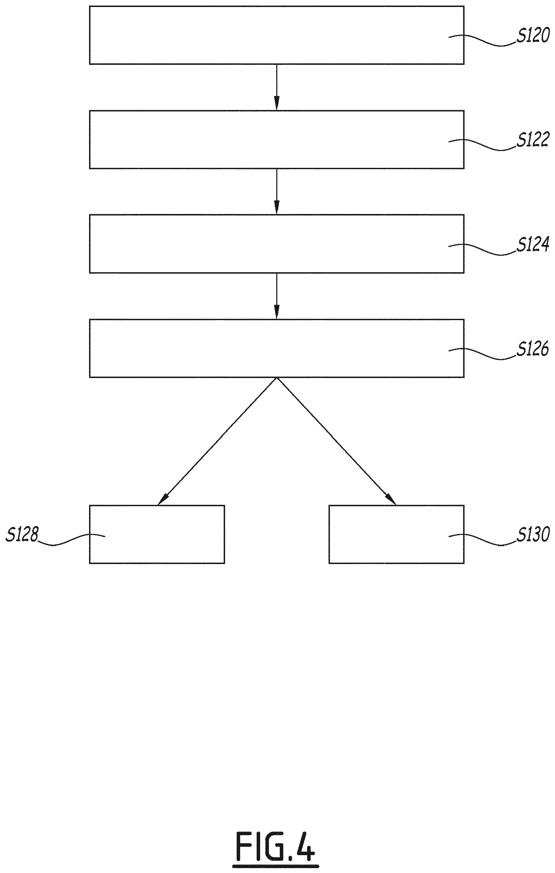

Des exemples de fonctionnement des appareils 6 et du serveur 8 sont maintenant décrits en référence aux figures 3 et 4.

Au préalable, le système 2 peut avoir fait l'objet d'une phase d'installation par un technicien.

Par exemple, les appareils 6 sont installés sur les équipements 4 que l'on souhaite surveiller. Les appareils 6 sont ensuite démarrés et leur interface de communication 24 peut être configurée pour qu'ils soient en mesure d'envoyer leurs messages à destination du serveur 8. Par exemple, le technicien peut enregistrer en mémoire une adresse réseau du serveur 8.

Les appareils 6 installés peuvent ensuite être déclarés au serveur 8, par exemple en renseignant dans la base de données 18 un identifiant de chaque appareil 6, et en y associant, dans la base de données 18, des informations relatives à l'équipement 4 auquel ledit 6 est associé. Ces informations peuvent, par exemple, concerner un emplacement de l'équipement 4, un nom de l'équipement 4, le type d'équipement 4, la nature du paramètre d'état surveillé par le capteur 20 de l'appareil 6, la date d'installation, et bien d'autres exemples encore.

Le serveur 8 peut être configuré pour acquérir ces informations auprès d'un technicien, par exemple par l'intermédiaire d'une interface homme-machine, et pour ensuite mettre à jour la base de données 18 à partir des informations acquises.

L'insert a) de la figure 3 représente un premier exemple de procédé d'envoi, par un appareil de surveillance 6, d'un message indicatif de l'état fonctionnel de l'équipement 4 auquel l'appareil 6 est associé.

Ce procédé est par exemple exécuté par le module de traitement 22.

Par exemple, ce procédé est mis en oeuvre périodiquement pour envoyer une information sur l'état de l'appareil 4, même si cet état n'a pas subi de changement.

Cela permet notamment au serveur 8 de savoir que l'appareil 6 est toujours fonctionnel et qu'il est toujours en état d'émettre des messages.

Dans l'exemple illustré, le procédé est activé lors d'une étape de démarrage S100, par exemple suite à la mise en service de l'appareil 6.

Lors d'une étape S102, un compteur est démarré, par exemple par le module de traitement 22, pour décompter une durée prédéfinie. La durée peut avoir été prédéfinie à l'avance, par exemple pour choisir une périodicité d'envoi des messages.

Par exemple, la périodicité peut être choisie supérieure ou égale à plusieurs jours, ou à un jour (périodicité quotidienne), ou plus.

Lors d'une étape S104, répétée régulièrement, l'appareil 6 vérifie automatiquement si la durée prédéfinie est écoulée, par exemple en vérifiant si le compteur a fini de décompter ladite durée.

Dès que la durée prédéfinie est identifiée comme étant écoulée, alors, au cours d'une étape S106, l'appareil 6 génère et envoie automatiquement un message 30 à destination du serveur 8, au moyen de l'interface de communication embarquée 24.

Si aucun changement d'état n'a été détecté par le capteur 20, alors l'indicateur d'état 36 contenue dans le message 30 généré prend une valeur indiquant une absence de changement d'état (c'est-à-dire, indiquant un état de fonctionnement présumé normal).

Par exemple, l'indicateur d'état 36 prend la première valeur.

L'insert b) de la figure 3 représente un deuxième exemple de procédé d'envoi, par un appareil de surveillance 6, d'un message indicatif de l'état fonctionnel de l'équipement 4 auquel l'appareil 6 est associé.

Ce procédé est par exemple exécuté par le module de traitement 22.

De préférence, ce procédé est mis en oeuvre dès qu'un appareil 6 détecte un changement d'état fonctionnel de l'équipement 4 auquel il est associé.

Cela permet notamment au serveur 8 d'être prévenu automatiquement dès qu'un des équipements 4 est susceptible d'avoir changé d'état.

Par exemple, initialement, le capteur 20 mesure une grandeur physique qui est liée à l'état de l'équipement 4. Cette mesure peut être réalisée périodiquement ou en continu ou de façon répétée au cours du temps.

Lors d'une étape S110, l'appareil 6 détecte un changement d'état de l'équipement 4. Par exemple, la détection est réalisée par le module de traitement 22 de l'appareil 6, sur la base des données de mesure fournies en sortie du capteur 20.

Dans certaines implémentations, l'appareil 6 peut détecter un changement de la grandeur physique (de la propriété) mesurée par le capteur 20.

C'est notamment le cas pour un capteur mesurant une grandeur physique pouvant prendre deux états distincts : par exemple un état ouvert ou un état fermé, comme expliqué précédemment.

Alternativement, dans d'autres implémentations, l'appareil 6 peut conserver en mémoire une variable d'état représentant l'état courant de l'appareil 4, et mettre à jour cette variable d'état au fil du temps en fonction des valeurs mesurées par le capteur 20.

Par exemple, un état de fonctionnement normal peut correspondre à des valeurs mesurées appartenant à un ou à plusieurs intervalles de valeur prédéfinis, et un état anormal peut correspondre à des valeurs mesurées appartenant à un ou à plusieurs autres intervalles de valeur prédéfinis.

C'est notamment le cas des capteurs qui mesurent une grandeur physique pouvant varier continûment, comme expliqué précédemment.

Lors d'une étape S112, l'appareil 6 génère un message 30, contenant notamment l'indicateur d'état 36, dont la valeur est choisie pour indiquer l'occurrence d'un défaut.

Par exemple, l'indicateur d'état 36 prend la deuxième valeur.

Lors d'une étape S114, le message 30 est envoyé à destination du serveur 8 au moyen de l'interface de communication 24.

Ainsi, l'envoi du message est réalisé rapidement par l'appareil 6, sans forcément avoir besoin de dialoguer avec le serveur 8 et sans se préoccuper de savoir si le message est ensuite bien reçu par le serveur 8.

En d'autres termes, l'appareil 6 n'a pas nécessairement besoin de recevoir de messages de la part du serveur 8, et dans certaines implémentations, l'interface de communication 24 pourrait très bien être configurée pour n'être que capable d'émettre des messages (mais pas en recevoir).

Optionnellement, pour augmenter les chances de réception du message 30 par le serveur 8, l'appareil 6 peut être programmé pour répéter l'envoi du message 30, par exemple en répétant l'étape S114.

Cet envoi peut être répété une ou plusieurs fois. Par exemple, un nombre de répétitions peut être prédéfini en mémoire de l'appareil 6.

Les répétitions peuvent avoir lieu à des instants prédéfinis, par exemple au bout d'intervalles de temps prédéfinis. Notamment, l'envoi du message 30 peut être répété périodiquement, pendant un certain temps ou un certain nombre de fois.

L'envoi du message 30 peut aussi, en variante, être répété indéfiniment jusqu'à ce qu'un technicien vienne réinitialiser l'appareil 6.

En référence à la figure 4 est maintenant décrit un procédé de réception et de traitement d'un message 30 envoyé par un appareil de surveillance 6. Ce procédé est par exemple mis en oeuvre par le serveur 8, et notamment par son module de traitement 16.

Le procédé débute par une étape S120, dans laquelle le serveur informatique 8 reçoit un message 30 envoyé par un des appareils 6, par exemple par l'intermédiaire d'une des liaisons de communication précédemment mentionnées.

Ensuite, lors d'une étape S122, le serveur 8 analyse automatiquement le contenu du message reçu, par exemple pour identifier l'appareil 6 qui a émis le message (et donc pour identifier l'équipement concerné), et pour déterminer la valeur de l'indicateur d'état 36.

Si le serveur 8 détermine, à partir de la valeur de l'indicateur d'état 36, que l'état fonctionnel de l'appareil 4 a changé, alors la base de données 18 est mise à jour lors d'une étape S124 pour refléter ce changement d'état.

Puis, lors d'une étape S126, le serveur 8 génère une alerte à destination d'un utilisateur.

Par exemple, l'alerte générée peut contenir des informations relatives à la nature de l'équipement 4, notamment son identifiant et/ou son nom et/ou sa localisation et/ou le type d'équipement 4 et/ou la nature de l'anomalie détectée.

Par exemple, les informations telles que le nom de l'équipement 4 ou sa localisation peuvent être extraites de la base de données 18 par le serveur 8 à partir de l'identifiant 34 contenu dans le message 30 reçu.

L'alerte peut également contenir des informations relatives à la nature du défaut (par exemple, l'arrachement d'un extincteur hors de son support, ou le déplacement d'un extincteur, ou l'ouverture d'une trappe ou d'une vanne, ou l'activation d'un détecteur), là encore à partir d'informations sur la nature de l'équipement 4 associé à l'appareil 6 qui a émis le message enregistrées dans la base de données 18, voire aussi sur le type de paramètre surveillé par l'appareil 6, cette information pouvant là aussi être enregistrée dans la base de données 18.

Par exemple, si le serveur 8 reçoit un message en provenance d'un appareil 6 identifié dans la base de données comme étant associé à un équipement 4 de type extincteur, et que l'appareil 6 est identifié dans la base de données comme étant un capteur d'arrachement, alors l'alerte peut indiquer que l'anomalie concerne une suspicion d'arrachement de l'extincteur.

Ainsi, on comprend que lors de l'étape S122 de traitement et de génération de l'alerte, le serveur 8 peut automatiquement parcourir la base de données 18 pour identifier l'équipement 4 concerné à partir de l'identifiant 34, et pour extraire des informations relatives à cet équipement 4 qui ont été préalablement entrées dans la base de données 18.

L'alerte peut être transmise à l'utilisateur de plusieurs manières, qui peuvent être combinées entre elles, ou utilisées de façon exclusive, selon les préférences exprimées par l'utilisateur, qui peuvent avoir été préalablement renseignées dans le serveur 8.

Par exemple, dans l'étape S128, l'alerte est affichée sur une interface homme-machine, par exemple une interface graphique, qui peut être affichée sur un écran d'un terminal utilisateur, tel qu'un ordinateur 10 ou un dispositif de communication mobile 12.

Selon un autre exemple, dans une étape S130, l'alerte est envoyée à l'utilisateur sous la forme d'un message électronique, par exemple par courriel, ou par téléphone, ou par tout autre service de télétransmission d'information, par exemple par SMS (Short Message Service).

Optionnellement, les alertes peuvent alors être regroupées dans un rapport, afin de réduire le nombre d'envois. Cela est particulièrement applicable lorsque plusieurs alertes sont destinées à être envoyées à un même client, par exemple concernant un ensemble d'équipements 4 relatifs à un même site géographique. Ce rapport peut regrouper plusieurs alertes relatives à plusieurs équipements 4 (ou plusieurs alertes relatives à différentes propriétés surveillées pour un même équipement 4).

Dans certains cas, le rapport peut être mis à disposition de l'utilisateur par l'intermédiaire d'une application dédiée préalablement installée sur l'ordinateur 10 ou le dispositif 12 de l'utilisateur. Le rapport peut aussi être mis à disposition de l'utilisateur sur un site internet hébergé sur un serveur informatique et accessible par l'utilisateur au travers d'un réseau informatique local ou bien par l'intermédiaire d'internet. Il peut en être de même pour tout ou partie des messages d'alerte envoyés.

Avantageusement, les informations contenues dans l'alerte peuvent être affichées sur un schéma synoptique représentant tout ou partie de l'ensemble des équipements 4 surveillés, ce schéma synoptique étant par exemple affiché par une interface graphique sur l'ordinateur 10 ou sur le dispositif 12 comme précédemment défini, cette interface pouvant être implémentée par l'application ou par le site internet précédemment évoqués.

Ainsi, cela permet à l'utilisateur de visualiser l'état de l'ensemble des équipements 4 d'une même zone et d'identifier si un ou plusieurs de ces équipements sont dans un état anormal nécessitant une intervention.

Optionnellement, dans le cas où l'indicateur d'état 36 indique que l'état fonctionnel de l'appareil 4 n'a pas changé, alors le serveur 8 peut quand même mettre à jour la base de données 18, et/ou envoyer un message au client (étapes S124 et S126), par exemple pour indiquer qu'un équipement 4 est susceptible d'être toujours dans un état de fonctionnement satisfaisant.

Il en va de même pour l'envoi de rapports et/ou pour l'affichage des informations sur le schéma synoptique.

En pratique, lorsqu'un équipement 4 est identifié comme étant susceptible d'être dans un état anormal, il peut être nécessaire d'envoyer un technicien sur place pour inspecter l'équipement 4 et, si nécessaire, pour le remettre en état de marche.

Dans ce cas, optionnellement, il peut être nécessaire de réinitialiser l'appareil de surveillance 6 pour rétablir l'état de fonctionnement comme étant égal à un état normal, voire de remplacer l'appareil de surveillance 6 par un appareil neuf.

Optionnellement, la base de données 18 peut alors devoir être mise à jour par le technicien pour refléter ce changement, par exemple pour changer l'état associé à l'appareil 6, ou pour déclarer un nouvel appareil 6 à la place de l'appareil 6 remplacé.

Par exemple, le serveur 8 peut être configuré pour recevoir et traiter une requête de mise à jour émise par le technicien depuis un terminal portable ou par l'intermédiaire d'un site internet.

Dans certaines variantes, l'étape S120 peut être déclenchée lorsqu'aucun message n'a été reçu alors qu'un message était attendu.

Cela concerne par exemple les implémentations dans lesquelles un ou plusieurs appareils 6 sont configurés pour envoyer des messages périodiquement, comme dans l'exemple illustré en regard de l'insert a) de la figure 2. Ainsi, l'étape S120 peut être déclenchée pour un appareil 6 lorsqu'aucun message 30 n'a été reçu par le serveur 8 depuis cet appareil 6 au bout d'une durée prédéfinie, cette durée étant supérieure ou égale à la périodicité d'envoi définie pour cet appareil 6.

L'identifiant de l'appareil 6 qui a été détecté comme n'ayant pas envoyé de message est alors utilisé dans les étapes S122 et suivantes.

En variante, les étapes des procédés décrits ci-dessus pourraient être exécutées dans un ordre différent. Certaines étapes pourraient être omises. Les exemples décrits ne font pas obstacle à ce que, dans d'autres modes de réalisation, d'autres étapes soient mises en oeuvre conjointement et/ou séquentiellement avec les étapes décrites.

Les modes de réalisation et les variantes envisagés ci-dessus peuvent être combinés entre eux pour créer de nouveaux modes de réalisation.

## Revendications

1. Système (2) pour surveiller un ensemble d'équipements (4) de sécurité dans un bâtiment, le système comportant une pluralité d'appareils de surveillance (6) ; chaque appareil de surveillance (6) étant configuré pour être associé à un équipement (4) et comportant un capteur (20) configuré pour mesurer une grandeur physique relative à l'état dudit équipement ;
dans lequel chaque appareil de surveillance est configuré pour :
- détecter (S110) un changement d'état de l'équipement surveillé lorsque le capteur mesure un changement de la grandeur physique ;
- en réponse à la détection d'un changement d'état, générer (S112) et envoyer (S114) un message radiofréquence (30) à destination d'un serveur informatique par l'intermédiaire d'une liaison de communication sans fil, ledit message comprenant un indicateur d'état (36) représentatif d'un changement de l'état fonctionnel de l'équipement associé
dans lequel ledit indicateur d'état (36) peut prendre une première valeur ou une deuxième valeur prédéfinies, la première valeur indiquant une absence de changement d'état, la deuxième valeur indiquant un changement d'état susceptible de correspondre à un état anormal, ladite deuxième valeur étant différente de ladite première valeur, la première valeur et la deuxième valeur de l'indicateur d'état (36) étant les mêmes pour tous les équipements surveillés, quelle que soit la nature de l'équipement surveillé.

2. Système selon la revendication 1, dans lequel la taille dudit message (30) est inférieure ou égale à un kilooctet.

3. Système selon l'une quelconque des revendications précédentes, dans lequel l'appareil de surveillance (6) est configuré pour communiquer avec le serveur informatique (8) par l'intermédiaire d'une liaison de communication sans fil à bas débit.

4. Système selon l'une quelconque des revendications précédentes, dans lequel les équipements (4) sont des équipements de sécurité, tels que des extincteurs, des systèmes d'alarme incendie, des blocs d'éclairage de sécurité, des robinets d'incendie armés, des trappes de désenfumage, des colonnes sèches, des systèmes automatiques d'extinction d'incendie, des appareils de détection tels que des détecteurs d'incendie ou des détecteurs de fumée, des alarmes sonores, ou toute combinaison de ces types d'équipements.

5. Système selon l'une quelconque des revendications précédentes, dans lequel le serveur informatique (8) est configuré pour envoyer une alerte à un utilisateur à partir des informations contenues dans un message (30) reçu depuis l'un des appareils de surveillance (6) lorsque l'indicateur d'état (36) contenu dans le message reçu (30) indique un changement d'état.

6. Système selon l'une quelconque des revendications précédentes, dans lequel au moins un appareil de surveillance (6) est configuré pour envoyer des messages à destination du serveur (8), de façon répétée avec une périodicité d'envoi prédéfinie, par exemple une périodicité quotidienne, dans lequel le serveur (8) est configuré pour envoyer une alerte à un utilisateur si aucun message n'a été reçu depuis cet appareil de surveillance (6) au bout d'une durée supérieure à la périodicité d'envoi.

7. Procédé pour surveiller un ensemble d'équipements (4), notamment des équipements de sécurité dans un bâtiment, au moyen d'un système de surveillance (2), le procédé comportant des étapes consistant à :
- détecter (S110), par un appareil de surveillance (6) du système (2) associé à un équipement (4) à surveiller, un changement d'état de l'équipement surveillé lorsqu'un capteur (20) de l'appareil de surveillance (6) mesure un changement d'une grandeur physique relative à l'état dudit équipement ;
- en réponse à la détection d'un changement d'état, générer (S112) et envoyer (S114) un message radiofréquence (30) à destination d'un serveur informatique (8) par l'intermédiaire d'une liaison de communication sans fil, ledit message comprenant un indicateur d'état (36) représentatif d'un changement de l'état fonctionnel de l'équipement associé (4), dans lequel ledit indicateur d'état (36) peut prendre une première valeur ou une deuxième valeur prédéfinies, la première valeur indiquant une absence de changement d'état, la deuxième valeur indiquant un changement d'état susceptible de correspondre à un état anormal, ladite deuxième valeur étant différente de ladite première valeur, la première valeur et la deuxième valeur de l'indicateur d'état (36) étant les mêmes pour tous les équipements surveillés, quelle que soit la nature de l'équipement surveillé.

8. Procédé selon la revendication 7, dans lequel le serveur informatique (8) envoie (S126, S128, S130) une alerte à un utilisateur à partir des informations contenues dans un message (30) reçu depuis l'un des appareils de surveillance (6) lorsque l'indicateur d'état (36) contenu dans le message reçu (30) indique un changement d'état.

## Patentansprüche

1. System (2) zum Überwachen einer Anordnung von Sicherheitsausrüstungen (4) in einem Gebäude, das System umfassend eine Vielzahl von Überwachungsgeräten (6) umfasst; wobei jedes Überwachungsgerät (6) konfiguriert ist, um mit einer Ausrüstung (4) assoziiert zu sein, und umfassend einen Sensor (20), der konfiguriert ist, um eine physikalische Größe in Bezug auf den Zustand der Ausrüstung zu messen;
wobei jede Überwachungsvorrichtung zu Folgendem konfiguriert ist:
- Erkennen (S110) einer Zustandsänderung der überwachten Ausrüstung, wenn der Sensor eine Änderung der physikalischen Größe misst;
- als Reaktion auf das Erkennen einer Zustandsänderung, Erzeugen (S112) und Senden (S114) einer Hochfrequenznachricht (30) an einen Computerserver mittels einer drahtlosen Kommunikationsverbindung, die Nachricht umfassend einen Zustandsindikator (36), der repräsentativ für eine Änderung des funktionalen Zustands der assoziierten Ausrüstung ist,
wobei der Zustandsindikator (36) einen ersten Wert oder einen zweiten vordefinierten Wert annehmen kann, wobei der erste Wert ein Nichtvorliegen einer Zustandsänderung angibt, der zweite Wert eine Zustandsänderung angibt, die möglicherweise einem anormalen Zustand entspricht, wobei sich der zweite Wert von dem ersten Wert unterscheidet, wobei der erste Wert und der zweite Wert des Zustandsindikators (36) für alle überwachten Ausrüstungen gleich sind, unabhängig von der Art des überwachten Ausrüstung.

2. System nach Anspruch 1, wobei die Größe der Nachricht (30) kleiner als oder gleich wie ein Kilobyte ist.

3. System nach einem der vorherigen Ansprüche, wobei das Überwachungsgerät (6) konfiguriert ist, um mittels einer drahtlosen Kommunikationsverbindung mit niedriger Geschwindigkeit mit dem Computerserver (8) zu kommunizieren.

4. System nach einem der vorherigen Ansprüche, wobei die Ausrüstungen (4) Sicherheitsausrüstungen sind, wie beispielsweise Feuerlöscher, Brandalarmsysteme, Sicherheitsbeleuchtungsblöcke, Wasserhähne, Rauchabzugsklappen, Trockensäulen, automatische Feuerlöschsysteme, Detektionsgeräte, wie beispielsweise Brandmelder oder Rauchmelder, akustische Alarmgeber oder eine Kombination dieser Arten von Ausrüstungen.

5. System nach einem der vorherigen Ansprüche, wobei der Computerserver (8) konfiguriert ist, um anhand der Informationen, die in einer von einem der Überwachungsgeräte (6) empfangenen Nachricht (30) enthalten sind, eine Warnung an einen Benutzer zu senden, wenn der in der empfangenen Nachricht (30) enthaltene Zustandsindikator (36) eine Zustandsänderung angibt.

6. System nach einem der vorherigen Ansprüche, wobei mindestens ein Überwachungsgerät (6) konfiguriert ist, um Nachrichten wiederholt mit einer vorbestimmten Sendehäufigkeit, beispielsweise einer täglichen Häufigkeit an den Server (8) zu senden, wobei der Server (8) konfiguriert ist, um eine Warnung an einen Benutzer zu senden, wenn nach einer Zeitdauer, die länger als die Sendehäufigkeit ist, keine Nachricht von diesem Überwachungsgerät (6) empfangen wird.

7. Verfahren zum Überwachen einer Ausrüstungsanordnung (4), insbesondere von Sicherheitsausrüstungen in einem Gebäude, mittels eines Überwachungssystems (2), wobei das Verfahren umfassend Schritte, die aus Folgendem bestehen:
- Erkennen (S110), durch ein Überwachungsgerät (6) des Systems (2), das mit einer zu überwachenden Ausrüstung (4) assoziiert ist, einer Zustandsänderung der überwachten Ausrüstung, wenn ein Sensor (20) des Überwachungsgeräts (6) eine Änderung einer physikalischen Größe in Bezug auf den Zustand der Ausrüstung misst;
- als Reaktion auf das Erkennen einer Zustandsänderung, Erzeugen (S112) und Senden (S114) einer Hochfrequenznachricht (30) an einen Computerserver (8) mittels einer drahtlosen Kommunikationsverbindung, die Nachricht umfassend einen Zustandsindikator (36), der repräsentativ für eine Änderung des funktionalen Zustands der assoziierten Ausrüstung (4) ist, wobei der Zustandsindikator (36) einen ersten Wert oder einen zweiten vordefinierten Wert annehmen kann, wobei der erste Wert ein Nichtvorliegen einer Zustandsänderung angibt, der zweite Wert eine Zustandsänderung angibt, die möglicherweise einem anormalen Zustand entspricht, wobei sich der zweite Wert von dem ersten Wert unterscheidet, wobei der erste Wert und der zweite Wert des Zustandsindikators (36) für alle überwachten Ausrüstungen gleich sind, unabhängig von der Art des überwachten Ausrüstung.

8. Verfahren nach Anspruch 7, wobei der Computerserver (8) anhand der Informationen, die in einer von einem der Überwachungsgeräte (6) empfangenen Nachricht (30) enthalten sind, eine Warnung an einen Benutzer sendet (S126, S128, S130), wenn der in der empfangenen Nachricht (30) enthaltene Zustandsindikator (36) eine Zustandsänderung angibt.

## Claims

1. A system (2) for monitoring a set of security equipment (4) in a building, the system comprising a plurality of monitoring devices (6); each monitoring device (6) being configured to be associated with a piece of equipment (4) and comprising a sensor (20) configured to measure a physical quantity relating to the state of said equipment;
in which each monitoring device is configured to:
- detecting (S110) a change of state of the monitored equipment when the sensor measures a change in the physical quantity;
- in response to the detection of a change of state, generating (S112) and sending (S114) a radio frequency message (30) to a computer server via a wireless communication link, said message comprising a state indicator (36) representative of a change in the functional state of the associated equipment
in which the said status indicator (36) can take a first predefined value or a second predefined value, the first value indicating an absence of change in status, the second value indicating a change in status likely to correspond to an abnormal state, the said second value being different from the said first value, the first value and the second value of the status indicator (36) being the same for all the monitored equipment, whatever the nature of the monitored equipment.

2. A system as claimed in claim 1, wherein the size of said message (30) is less than or equal to one kilobyte.

3. A system according to any one of the preceding claims, wherein the monitoring device (6) is configured to communicate with the computer server (8) via a low-speed wireless communication link.

4. A system according to any one of the preceding claims, in which the equipment (4) is safety equipment, such as fire extinguishers, fire alarm systems, emergency lighting units, armed fire valves, smoke extraction hatches, dry columns, automatic fire extinguishing systems, detection devices such as fire detectors or smoke detectors, audible alarms, or any combination of these types of equipment.

5. A system according to any one of the preceding claims, wherein the computer server (8) is configured to send an alert to a user on the basis of information contained in a message (30) received from one of the monitoring devices (6) when the status indicator (36) contained in the received message (30) indicates a change of status.

6. A system according to any one of the preceding claims, wherein at least one monitoring device (6) is configured to send messages to the server (8), repeatedly with a predefined sending periodicity, for example a daily periodicity, wherein the server (8) is configured to send an alert to a user if no message has been received from this monitoring device (6) after a period of time greater than the sending periodicity.

7. A method of monitoring a set of equipment (4), in particular security equipment in a building, by means of a monitoring system (2), the method comprising the steps of:
- detecting (S110), by a monitoring apparatus (6) of the system (2) associated with equipment (4) to be monitored, a change in state of the monitored equipment when a sensor (20) of the monitoring apparatus (6) measures a change in a physical quantity relating to the state of said equipment;
- in response to the detection of a change of state, generating (S112) and sending (S114) a radio-frequency message (30) to a computer server (8) via a wireless communication link, said message comprising a state indicator (36) representative of a change in the functional state of the associated equipment (4), wherein said state indicator (36) can take a first value or a second predefined value, the first value indicating an absence of change in state, the second value indicating a change in state likely to correspond to an abnormal state, said second value being different from said first value, the first value and the second value of the state indicator (36) being the same for all the monitored equipment, whatever the nature of the monitored equipment.

8. A method according to claim 7, in which the computer server (8) sends (S126, S128, S130) an alert to a user on the basis of information contained in a message (30) received from one of the monitoring devices (6) when the status indicator (36) contained in the received message (30) indicates a change of status.
